# EUROPÄISCHE PATENTSCHRIFT

(11) **EP 0 848 364 B1**
(45) Veröffentlichungstag und Bekanntmachung des Hinweises auf die Patenterteilung: **27.09.2000**
(21) Anmeldenummer: 98101718.9
(22) Anmeldetag: 02.08.1993
(51) Int. Cl.: G08G 1/097, G08G 1/07

(54) **Verfahren und Vorrichtung zur Übertragung von Geschwindigkeitswechselzeicheninformationen**
Method and device for transmitting shift signal informations of velocity
Procédé et appareil pour transmettre les informations de signalisation cyclique de vitesse

(30) Priorität: 01.08.1992 DE 4225466; 23.10.1992 DE 4235751
(43) Veröffentlichungstag der Anmeldung: 17.06.1998
(62) Teilanmeldung aus: 93112369.9
(73) Patentinhaber: Gebert, Franz J., Midrand, Gauteng (ZA); Gebert, Rüdiger H., Midrand, Gauteng (ZA); Gebert, Ralf D.H., Midrand, Gauteng (ZA)
(72) Erfinder: Gebert, Franz J., Midrand, Gauteng (ZA); Gebert, Rüdiger H., Midrand, Gauteng (ZA); Gebert, Ralf D.H., Midrand, Gauteng (ZA)
(74) Vertreter: Schubert, Siegmar, Dipl.-Ing.

(56) Entgegenhaltungen:
- DE-A- 4 017 533
- US-A- 4 814 765

## Beschreibung

Die Erfindung betrifft ein Verfahren zur Übertragung von Geschwindigkeitswechselzeicheninformationen nach dem Oberbegriff des Anspruchs 1.

Ein weiterer Aspekt der Erfindung betrifft entsprechende Einrichtungen zur Übertragung von Geschwindigkeitswechselzeicheninformationen gemäß dem Oberbegriff des Anspruchs 6.

Geschwindigkeitsverkehrszeichenanlagen werden nach dem Stand der Technik insbesondere durch Prozeßrechner aufgrund erfaßten Verkehrsaufkommens und/oder gegebenenfalls weiterer Parameter gesteuert. Zur Kontrolle der Einhaltung der verkehrsabhängigen Geschwindigkeitswechselzeichen können übliche Verkehrsüberwachungsanlagen (abgekürzt: Überwachungsanlagen) herangezogen werden. Diese Überwachungsanlagen können direkt und manuell auf die für die Geschwindigkeitszeichenanlagen gesetzten Parameter eingestellt werden, so daß überwacht werden kann, ob die entsprechenden Grenzwerte von den Verkehrsteilnehmern eingehalten werden. Die den Geschwindigkeitswechselzeicheninformationen entsprechenden Wechseldaten werden dabei in den Überwachungsanlagen im Rahmen deren Steuerung gespeichert, um im Falle einer Überschreitung der Grenzwertparameter - Geschwindigkeitsbegrenzungen - zur Beweisführung herangezogen werden zu können. Die Grenzwertparameter werden in diesem Kontext auch als Geschwindigkeitsbegrenzungsparameter bezeichnet. Zu diesem Ziel müssen die Wechseldaten in den Überwachungsanlagen entsprechend den Geschwindigkeitswechselzeicheninformationen, die für die Verkehrsteilnehmer sichtbar sind, geändert werden. Zu diesem Zweck ist denkbar, die Überwachungsanlagen, die von den Geschwindigkeitsverkehrszeichenanlagen entfernt aufgestellt werden, in der Weise zu koppeln, daß die jeweiligen Wechselzeicheninformationen bzw. die entsprechenden Wechseldaten, die zur Steuerung in Geschwindigkeitsverkehrszeichenanlagen über einen Datenbus eingespeist werden, über diesen Datenbus auch die Verkehrsüberwachungsanlagen programmieren, so daß die Grenzwertparameter in den Verkehrsüberwachungsanlagen nach Maßgabe der Geschwindigkeitswechselzeicheninformationen gesteuert werden. Bei einer solchen hard- und softwaremäßigen Ankoppelung der Überwachungsanlagen an die Geschwindigkeitsverkehrszeichenanlagen können jedoch, wie die Erfinder erkannt haben, unerwünschte Systembeeinflussungen über die Datenbusse der Verkehrslenkung auftreten, die im Extremfall zum Zusammenbruch der Datennetze führen können.

Bekannt sind ein Verfahren und eine Einrichtung zur Anzeige des Zustands eines Systems von Verkehrsampeln (US-A-4 814 765). Im Einzelnen werden jeweils an einer Kreuzung Ampeln durch eine Kreuzungsverkehrssteuereinrichtung teilweise abhängig von örtlichen Verkehrsgegebenheiten gesteuert, die von Fahrzeugdetektoren erfaßt werden. Die Steuerungseinrichtungen sind mit einem Hauptverkehrsaderkoordinator und Datenkonzentrator gekoppelt, der nahe der Verkehrsader angeordnet ist und der den Betrieb der Kreuzungsverkehrssteuereinrichtung überwacht und synchronisiert, indem die Verkehrsampelintervalle für einen koordinierten Betrieb eingestellt werden. Ein Personalcomputer mit Bildschirm ist entfernt von der Verkehrsader aufgestellt. Zu ihm werden Daten, die die Zustände der Verkehrsampeln des Systems darstellen, von dem Koordinator und Datenkonzentrator über eine Telefonleitung und Modems als Interface übertragen, um die Zustände des Systems von Verkehrsampeln zu verschiedenen Zykluszeiten für eine Überwachung der Verkehrsampeln anzuzeigen. Die oben geschilderte Hardware der Einrichtung ist konventionell. Zu der Funktion der Einrichtung gehört es dementsprechend, daß der Personalcomputer Zustandsdaten von dem Koordinator und Datenkonzentrator anfordert, die daraufhin in umgekehrter Richtung wie die Anforderung über die Telefonleitung in den Personalcomputer übertragen werden, um in diesem verarbeitet und auf dem Bildschirm graphisch angezeigt zu werden. Diese Vorgänge können sich in Sekundenabständen wiederholen.

Zum Stand der Technik gehört ferner ein stromgespeister Datenbus, über den verschiedene Endgeräte Daten austauschen (US-A-4 264 827) und der jeweils einen Buskoppler für jedes Endgerät in Form eines getrennten, lösbaren Kernelements aufweist. Der Buskoppler ist dazu mit einem verdrillten Leitungspaar induktiv gekoppelt, welches an beiden Enden kurzgeschlossen ist. Dieser Datenbus findet insbesondere bei Avioniksystemen in Flugzeugen Anwendung.

Der Erfindung liegt die Aufgabe zugrunde, Verkehrsüberwachungsanlagen möglichst zeitgleich wie die Geschwindigkeitsverkehrszeichenanlagen mit den Geschwindigkeitswechselzeicheninformationen bzw. entsprechenden Wechseldaten zu beaufschlagen, jedoch eine störende Beeinflussung der Datenbusse, die primär zur Steuerung der Geschwindigkeitsverkehrszeichenanlagen dienen, auszuschließen.

Die Lösung der Aufgabe besteht in dem in Anspruch 1 gekennzeichneten Verfahren.

Demgemäß wird die galvanisch entkoppelte und bezüglich der Steuerung rückwirkungsfreie Übertragung der Geschwindigkeitswechselzeicheninformationen über einen Teil der Übertragungsstrecke dadurch durchgeführt, daß die Übertragung mit von den Steuerströmen der Anzeigeelemente elektromagnetisch induzierten Signalen gesteuert wird.

Die Signale zur Übertragung werden hier also induktiv von der Geschwindigkeitsverkehrszeichenanlage abgegriffen. Die Erzeugung der induzierten Signale direkt von den Steuerströmen der Anzeigeelemente hat den zusätzlichen Vorteil, daß deren Funktion überwacht werden kann, insofern als bei intakten Anzeigeelementen Steuerströme und Steuerstromänderungen in einem bestimmten Toleranzbereich auftreten.

Zum Abgriff der induzierten Signale durch elektromagnetische Induktion dienen nach Anspruch 2 bevorzugt Steuerströme, die als Ausgangsströme einer mit den Anzeigeelementen verbundenen Treiberanordnung entstehen.

Die Steuerströme hängen von der Art der Anzeigeelemte ab. Als solche können beispielsweise kleine Glühlampen gruppiert sein. Stattdessen können z.B. auch größere Anzeigeelemente in der Art der Siebensegmentanzeigen vorgesehen werden.

Zweckmäßig werden nach Anspruch 3 die induzierten Signale vor der Übertragung zu den Verkehrsüberwachungsanlagen pulsgeformt umgesetzt, d.h. kodiert, gegebenenfalls in Wechseldaten, welche die Geschwindigkeitsbegrenzungsparameter in den Verkehrsüberwachungsanlagen steuern können, und verstärkt.

Die Übertragung der Wechseldaten kann dabei über eine Datenleitung zu der Überwachungsanlage erfolgen, da eine weitere galvanische Trennung nicht mehr notwendig ist. Dem steht nicht entgegen, daß, wenn es aus anderen Gründen erwünscht ist, die Datenübertragung auch drahtlos über Funk durchgeführt werden kann.

Eine geeignete Einrichtung zur Durchführung des Verfahrens zeichnet sich durch die in dem kennzeichnenden Teil des Anspruchs 6 angegebenen Merkmale aus.

Als induktive Wandler, in denen die Wandlung der zeitlichen Steuerstromänderungen in die induzierten Signale für die Steuerung der Verkehrsüberwachungsanlage erfolgt, sind zweckmäßig gemäß Anspruch 7 Ringkerne vorgesehen, durch welche die Steuerstromleitungen und Leitungen der induzierten Signale geführt sind. Es kann dabei von Einzelmaßnahmen Gebrauch gemacht werden, wie sie von der Datenverarbeitung generell bekannt sind.

Weitere zweckmäßige und vorteilhafte Merkmale ergeben sich aus den Ansprüchen 8 - 10.

Ein Ausführungsbeispiel der erfindungsgemäßen Einrichtung wird im folgenden anhand einer Zeichnung mit einer Figur erläutert, in der dargestellt ist:

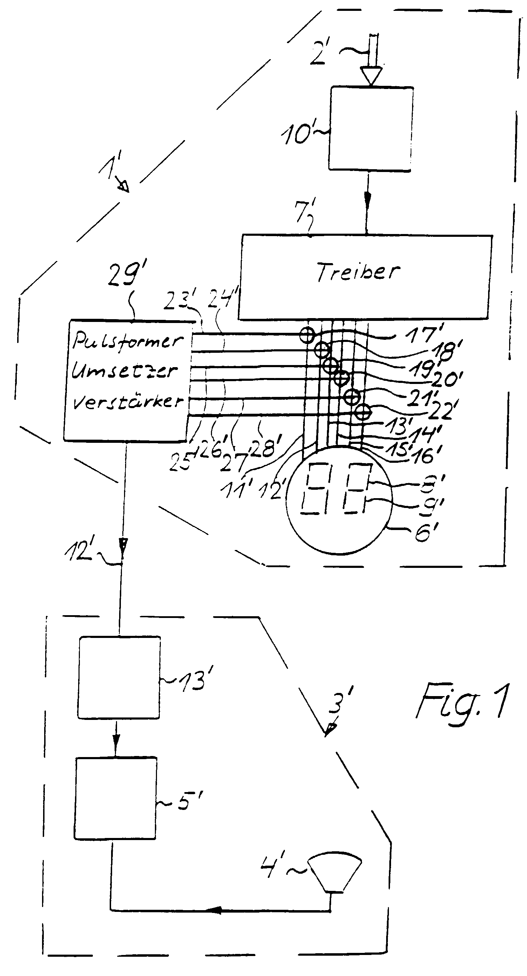

- Fig. 1: ein vereinfachtes Blockschaltbild einer Einrichtung, in welcher die galvanisch entkoppelte Übertragung von Geschwindigkeitswechselzeicheninformationen durch elektromagnetisch induzierte Signale erfolgt.

Es ist in dem Ausführungsbeispiel nur eine Verkehrsüberwachungsanlage dargestellt, obwohl von einer Geschwindigkeitsverkehrswechselzeichenanlage mehrere Verkehrsüberwachungsanlagen gesteuert werden können.

In Fig. 1 ist mit 1' generell eine Geschwindigkeitsverkehrszeichenanlage bezeichnet, die von einem Datenbus 2' gesteuert wird. Der Datenbus kann mit einem nicht dargestellten Prozeßrechner zur Verkehrslenkung in Verbindung stehen. Eine allgemein mit 3' bezeichnete Überwachungseinrichtung, umfassend eine Sonde 4' beliebiger Bauart und einen Steuerungsteil 5', dient zur Überwachung der Verkehrsteilnehmer, ob diese die ihnen dargestellten Geschwindigkeitswechselzeicheninformationen befolgen. Die Sonde kann durch Fahrbahnkontakte, Verkehrsmeßkabel, Lichtschranken, Mikrowellen, Funkschranken oder Rückstrahlgeräte verwirklicht sein. Der Steuerungsteil der Überwachungseinrichtung setzt Wechseldaten entsprechend den Geschwindigkeitsverkehrswechselinformationen, die gegebenenfalls zwischengespeichert sind, um. Die Einhaltung der Geschwindingkeitsgebrenungsgrenzwertparameter wird durch die Überwachungseinrichtung kontrolliert. Dazu umfaßt die Steuerungseinrichtung auch Dokumentationsmittel, mit denen Abweichungen der Verkehrsteilnehmer von den Geschwindigkeitsbegrenzungsgrenzwertparametern festgehalten werden.

Zur Darstellung der Wechselzeichen für die Verkehrsteilnehmer dient die Geschwindigkeitswechselzeichenanlage 1', deren Anzeigentableau entsprechend den von dem Datenbus 2' vorgegebenen Wechseldaten - der Geschwindigkeit - gesteuert wird. Die Steuerung erfolgt dabei durch von einem Treiber 7' abgegebene Steuerströme für einzelne Anzeigeelemente, z.B. 8', 9' einer Ziffer. Hierzu werden die von dem Bus gelieferten Daten in einer Auswerteeinrichtung 10' so ausgewertet, d.h. dekodiert, daß die einzelnen Segmente des Anzeigetableaus die in den Daten enthaltene Geschwindigkeitswechselzeicheninformation optisch darstellen.

Die von dem Treiber 7' abgegebenen Ausgangsströme in Leitungen 11' bis 16' dienen bestimmungsgemäß zur Aktivierung der einzelnen Anzeigeelemente, z.B. 8', 9', die ein Wechselzeichen bilden. Darüber hinaus werden sie jedoch auch zur Steuerung der Übertragung der Geschwindigkeitswechselzeicheninformationen zu der Überwachungseinrichtung 3' herangezogen. Hierzu ist jede der Leitungen 11' bis 16' durch einen Ringkern 17' bis 22' geführt, durch den andererseits je eine Leseleitung 23' bis 28' gelegt ist. Die Leseleitungen führen zu je einem Pulsformer, Umsetzer und Verstärker, die gemeinsam in einem Block 29' angedeutet sind. Der Umsetzer kodiert die impulsgeformten induzierten Signale, die mit dem Umsetzer in Wechseldaten umgesetzt werden können. Diese Daten können nach Verstärkung ohne weiteres über die Datenleitung 12' zu der beschriebenen Überwachungseinrichtung 3' und gegebenenfalls weiteren nicht dargestellten Überwachungseinrichtungen übertragen werden. Von der Datenleitung 12' werden die Wechseldaten in eine Schnittstelle 13' der Überwachungsanlage 3' eingespeist, um in dem mit ihr verbundenen Steuerteil in Geschwindigkeitsbegrenzungsgrenzwertparameter umgesetzt zu werden.

Da die galvanische und steuerungsmäßige Entkopplung zwischen dem Bus 2' und den Überwachungseinrichtungen in der Übertragungsstrecke zwischen den Ausgangsleitungen 11' bis 16' und den Leseleitungen 23' bis 28' stattfand, brauchen keine weiteren Entkopplungsmaßnahmen wie z.B. optische Übertragung oder Funkübertragung getroffen zu werden.

Bei den von den Steuerströmen der Anzeigeelemente induzierten Signalen handelt es sich um Signalspannungen, welche durch die von den Steuerströmen hervorgerufenen magnetischen Flußänderungen induziert werden.

Zu der Einrichtung zur Übertragung von Geschwindigkeitswechselzeicheninformationen und den damit ausgeübten Verfahren wird generell definiert, daß unter der Bezeichnung "Geschwindigkeitswechselzeicheninformationen" Informationen über vorgegebene, den Verkehrsteilnehmern angezeigte Geschwindigkeitsgrößen verstanden werden, welche von den Verkehrsteilnehmern zu beachten, d.h. einzuhalten sind. Hingegen sollen hierunter keine Verkehrsampelsignale verstanden werden, zumal deren Informationsgehalt gering ist.

Die Übertragung der Geschwindigkeitswechselzeicheninformationen dient zur Geschwindigkeitsdatenerfassung.

## Patentansprüche

1. Verfahren zur Übertragung von Geschwindigkeitswechselzeicheninformationen, welche von Geschwindigkeitsverkehrszeichenanlagen (1) mit Anzeigeelementen für Verkehrsteilnehmer sichtbar abgegeben werden, zu räumlich getrennten Verkehrsüberwachungsanlagen (3,3"), in denen sie gespeichert und in Geschwindigkeitsbegrenzungsgrenzwertparameter umgesetzt werden, wobei die Geschwindigkeitsverkehrszeichenanlage (1) von einem Datenbus (2,2') gesteuert wird,
**dadurch gekennzeichnet,**
daß die Übertragung der Geschwindigkeitswechselzeicheninformationen bzw. Wechseldaten mit von Steuerströmen der Anzeigeelemente (8',9') induzierten Signalen gesteuert wird, wodurch die Übertragung der Geschwindigkeitswechselzeicheninformationen von der Geschwindigkeitsverkehrszeichenanlage (1) zu den Verkehrsüberwachungsanlagen (3,3") galvanisch entkoppelt und in einer Weise erfolgt, in welcher der Steuerungsablauf in den Verkehrsüberwachungsanlagen (3,3") nicht auf den Datenbus (2,2') rückwirkt.

2. Verfahren nach Anspruch 1,
**dadurch gekennzeichnet,**
daß als Steuerströme, welche die Signale induzieren, Ausgangsströme eines mit den Anzeigeelementen (8',9') verbundenen Treibers dienen.

3. Verfahren nach Anspruch 2,
**dadurch gekennzeichnet,**
daß die induzierten Signale vor der Übertragung pulsgeformt, umgesetzt und verstärkt werden.

4. Verfahren nach Anspruch 3,
**dadurch gekennzeichnet,**
daß die induzierten und pulsgeformten Signale in elektrisch übertragbare Wechseldaten umgesetzt werden, anschließend zu den Überwachungsanlagen (3') übertragen werden und in diesen gespeichert sowie zur Steuerung der Grenzwertparameter der Verkehrsüberwachungsanlagen (3') verwendet werden.

5. Verfahren nach Anspruch 4,
**dadurch gekennzeichnet,**
daß die Wechseldaten über eine Datenleitung zu der Überwachungsanlage (3') übertragen werden.

6. Einrichtung zur Übertragung von Geschwindigkeitswechselzeicheninformationen, die von Geschwindigkeitsverkehrszeichenanlagen (1') mit einzeln mit Steuerströmen aktivierbaren Anzeigeelementen (8',9'), die Wechselzeichen bilden, abgegeben werden, zu Verkehrsüberwachungsanlagen (3') zur Durchführung des Verfahrens nach Anspruch 1,
**dadurch gekennzeichnet,**
daß in Steuerstromleitungen (11' bis 16'), die mit den Anzeigeelementen (8',9') der Geschwindigkeitsverkehrszeichenanlagen in Verbindung stehen, induktive Wandler (23' bis 28') angeordnet sind, mit einem Primärkreis, der mit je einer Steuerstromleitung gebildet ist, und mit einem gegen den Primärkreis isolierten Sekundärkreis in Form von Leseleitungen (23' bis 28'), in dem das induzierte Signal erzeugt wird, daß die Sekundärkreise in dem induktiven Wandler mit Übertragungsmitteln (12',29') in Verbindung stehen, die zu einer Empfangseinrichtung (13'), an der von der Geschwindigkeitsverkehrszeichenanlage (1') räumlich getrennte Überwachungseinrichtungen (3') angeschlossen sind, führen.

7. Einrichtung nach Anspruch 6,
**dadurch gekennzeichnet,**
daß die induktiven Wandler (23' bis 28') durch Ringkerne gebildet sind, durch welche die Steuerstromleitungen (Ausgangsleitungen 11' bis 16') und Leseleitungen (23' bis 28') geführt sind.

8. Einrichtung, bei welcher die Anzeigeelemente (8',9') mit Ausgangsleitungen (11' bis 16') eines Treibers (7') verbunden sind, nach Anspruch 6 oder 7,
**dadurch gekennzeichnet,**
daß die magnetischen Wandler bzw. Ringkerne (17' bis 22') in den Ausgangsleitungen des Treibers angeordnet sind.

9. Einrichtung nach einem der Ansprüche 6 - 8,
**dadurch gekennzeichnet,**
daß die Leitungen (Leseleitungen 23' bis 28') der induzierten Signale an einen Pulsformer mit nachgeschaltetem Umsetzer und Verstärker (28') angeschlossen sind.

10. Einrichtung nach einem der Ansprüche 6 - 9,
**dadurch gekennzeichnet,**
daß die Übertragungsmittel eine Datenleitung (12') zwischen der Geschwindigkeitsverkehrszeichenanlage (1') und der Überwachungseinrichtung (3') umfassen.

## Claims

1. Process for the transmission of variable speed traffic signal data, visibly displayed to motorists by speed traffic signal installations (1) comprising display elements, to spatially separate traffic monitoring systems (3, 3"), wherein they are stored and converted into speed limiting threshold parameters, the speed traffic signal installation (1) being controlled by a data bus (2, 2'),
**characterised in that**
the transmission of the variable speed traffic signal data or variable data, respectively, is controlled by signals induced by control currents of the display elements (8', 9'), whereby the transmission of the variable speed traffic signal data from the speed traffic signal installation (1) to the traffic monitoring systems (3, 3") is galvanically decoupled and is performed in a manner in which the control processes in the traffic monitoring systems (3, 3") have no effect on the data bus (2, 2').

2. Process according to claim 1,
**characterised in that**
output currents of a driver, connected to the display elements (8', 9') serve as control currents, inducing the signals.

3. Process according to claim 2,
**characterised in that**
the induced signals are transformed into pulses, converted end amplified prior to transmission.

4. Process according to claim 3,
**characterised in that**
the induced signals, transformed into pulses, are converted into electrically transferable variable data, transmitted subsequently to the monitoring systems (3'), where they are stored and utilised for the control of threshold parameters of the traffic monitoring systems (3').

5. Process according to claim 4,
**characterised in that**
the variable data are transmitted to the traffic monitoring system (3') by way of a data line.

6. Apparatus for transmitting variable speed traffic signal data, made available by speed traffic signal installations (1'), comprising display elements (8', 9'), adapted to be activated individually by control currents, forming variable data, to traffic monitoring systems (3') for carrying out the process according to claim 1,
**characterised in that**
inductive converters (23' to 28') are provided in control current lines (11' to 16'), communicating with the display elements (8', 9') of the speed traffic signal installations, comprising a primary circuit, formed by one control current line each and comprising a secondory circuit in the form of reading lines (23' to 28'), isolated in relation to the primary circuit, wherein the induced signal is generated, in that the secondary circuits in the inductive converter communicate with transmission means (12', 29'), leading to a receiver device (13'), to which monitoring systems (3') are connected, which are spatially separate from the speed traffic signal installation (1').

7. Apparatus according to claim 6,
**characterised in that**
the inductive converters (23' to 28') are formed by toroidal cores, through which the control current lines (output lines 11' to 16') and reading lines (23' to 28') pass.

8. Apparatus, wherein the display elements (8', 9') are connected to output lines (11' to 16') of a driver (7'), according to claim 6 or 7,
**characterised in that**
the magnetic converters or toroidal cores respectively (17' to 22') are provided in the output lines of the driver.

9. Apparatus according to any one of claims 8 to 8,
**characterised in that**
the lines (reading lines 23' to 28') of the induced signals are connected to a pulse former followed downstream by a converter and amplifier (28').

10. Apparatus according to any one of claims 6 to 9,
**characterised in that**
the transmission means comprise a data line (12') between the speed traffic signal installation (1') and the monitoring system (3').

## Revendications

1. Procédé de transfert de données issues de la signalisation routière des vitesses variables, affichées de façon visible aux usagers de la route au moyen d'installations de signalisation routière dédiées aux vitesses du trafic (1), comportant des éléments d'affichage, vers les systèmes de surveillance du trafic (3, 3") mis en place à un endroit éloigné, où elles sont mises en mémoire et converties en paramètres de vitesses maximales afin de limiter la vitesse, l'installation de signalisation routière dédiée aux vitesses du trafic (1) étant contrôlée par un bus de données (2, 2'),
caractérisé en ce que
le transfert des données issues de la signalisation routière des vitesses variables ou des données de valeurs variables est commandé par des signaux induits par les courants de commande des éléments d'affichage (8', 9'), ce qui a pour résultat que le transfert des données issues de la signalisation routière de vitesses variables à partir de l'installation de signalisation routière dédiée aux vitesses du trafic. (1) vers les systèmes de surveillance du trafic (3, 3") est isolé galvaniquement et se réalise de manière à ce que le processus de commande dans les systèmes de contrôle du trafic (3, 3") n'ait aucun effet sur le bus de données (2, 2').

2. Procédé selon la revendication 1,
caractérisé en ce que
les courants de sortie d'un pilote relié aux éléments d'affichage (8', 9') font office de courants de commande, induisant les signaux.

3. Procédé selon la revendication 2,
caractérisé en ce que
les signaux induits sont mis en forme d'impulsion, convertis et amplifiés avant le transfert.

4. Procédé selon la revendication 3,
caractérisé en ce que
les signaux induits et mis en forme d'impulsion sont convertis en données de valeurs variables en mesure d'être transmis électriquement, transmis par la suite aux installations de surveillance, où ils sont stockés et utilisés pour le contrôle des paramètres de valeurs limites des systèmes de surveillance du trafic (3').

5. Procédé selon la revendication 4,
caractérisé en ce que
les données de valeurs variables sont transmises à l'installation de surveillance du trafic (3') par une ligne dédiée au transfert des données.

6. Dispositif pour la transfert de données issues de la signalisation routière de vitesses variables, mis à disposition par les installations de signalisation routière dédiées aux vitesses du trafic (1'), comportant des éléments d'affichage (8', 9'), adaptés pour être activés individuellement par les courants de commande, constituant les données de valeurs variables, aux systèmes de surveillance du trafic (3') pour la réalisation du procédé selon la revendication 1,
caractérisé en ce que
dans les lignes des courants de commande (11' à 16'), communiquant avec les éléments d'affichage (8', 9') des installations de signalisation routière dédiées aux vitesses du trafic des convertisseurs inductifs (23' à 28') sont pourvus, comportant un circuit primaire, constitué par une ligne chaque du courant de commande et comportant un circuit secondaire, dans lequel le signal induit est créé, isolé par rapport au circuit primaire sous forme de lignes de lecture (23' à 28'), et caractérisé en ce que les circuits secondaires dans le convertisseur inductif sont en communication avec les moyens de transfert (12', 29'), conduisant à une installation de réception (12'), à laquelle des installations de surveillance (3') sont connectées, mises en place à un endroit éloigné de l'installation de signalisation routière dédiée aux vitesses du trafic (1').

7. Dispositif selon la revendication 6,
caractérisé en ce que
les convertisseurs inductifs (23' à 28') sont constitués par des noyaux toriques, par lesquels passent les lignes de courant de commande (lignes de sortie 11' à 16') et les lignes de lecture (23' à 28').

8. Dispositif, dans lequel les éléments d'affichage (8', 9') sont en communication avec les lignes de sortie (11' à 16') d'un pilote (7'), selon la revendication 6 ou 7,
caractérisé en ce que
les convertisseurs magnétiques ou les noyaux toriques respectivement (17' à 22'), sont pourvus dans les lignes de sortie du pilote.

9. Dispositif selon l'un quelconque des revendications 6 à 8,
caractérisé en ce que
les lignes (lignes de lecture 23' à 28') des signaux induits sont reliées à un moyen de mise en forme d'impulsion, suivi en aval par un convertisseur et un amplificateur (28').

10. Dispositif selon l'un quelconque des revendications 6 à 9,
caractérisé en ce que
les moyens de transfert comportent une ligne dédiée au transfert des données entre l'installation de signalisation routière dédiée aux vitesses du trafic (1') et l'installation de surveillance du trafic (3').
